(19) **Europäisches Patentamt / European Patent Office / Office européen des brevets**

(11) **EP 3 692 000 B1**

(12) **FASCICULE DE BREVET EUROPEEN**

(45) Date de publication et mention de la délivrance du brevet:
**03.04.2024 Bulletin 2024/14**

(21) Numéro de dépôt: **18793249.6**

(22) Date de dépôt: **04.10.2018**

(51) Classification Internationale des Brevets (IPC):
**C02F 3/30** (2023.01)    **C02F 101/16** (2006.01)

(52) Classification Coopérative des Brevets (CPC):
**C02F 3/307; C02F 3/303;** C02F 3/006; C02F 3/301;
C02F 2101/16; C02F 2209/14; C02F 2209/15;
C02F 2209/22; C02F 2301/04; Y02W 10/10

(86) Numéro de dépôt international:
**PCT/FR2018/052453**

(87) Numéro de publication internationale:
**WO 2019/069031 (11.04.2019 Gazette 2019/15)**

(54) **PROCÉDÉ DE TRAITEMENT BIOLOGIQUE DE L'AZOTE DES EFFLUENTS PAR NITRITATION**

VERFAHREN ZUR BIOLOGISCHEN BEHANDLUNG VON STICKSTOFF ODER ABWÄSSERN DURCH NITRIERUNG

METHOD FOR BIOLOGICAL TREATMENT OF NITROGEN OF EFFLUENTS BY NITRITATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.10.2017 FR 1759306**

(43) Date de publication de la demande:
**12.08.2020 Bulletin 2020/33**

(73) Titulaire: **Suez International**
**92040 Paris La Défense Cedex (FR)**

(72) Inventeurs:
• **CALIGARIS, Marc**
**78510 Triel sur Seine (FR)**
• **SAUR, Thibaut**
**75011 Paris (FR)**
• **MOZO, Irène**
**15706 Santiago de Compostela (ES)**

(74) Mandataire: **LLR**
**2, rue Jean Lantier**
**75001 Paris (FR)**

(56) Documents cités:
US-A- 5 863 435    US-A1- 2014 069 863
US-B1- 6 383 390

**Description**

L'invention concerne un procédé de traitement biologique de l'azote des effluents par nitritation. L'invention concerne également un procédé de traitement biologique de l'azote des effluents par nitritation-dénitritation et/ou dé-ammonification, aussi connue comme Nitritation Partielle - Anammox, dans lequel la nitritation est mise en oeuvre par le procédé de nitritation selon l'invention.

De façon classique, les stations de traitement des eaux résiduaires sont principalement conçues pour éliminer le carbone, l'azote et le phosphore au moyen de processus biologiques mettant en oeuvre des bactéries spécifiques.

Le traitement de l'azote fait généralement appel à une nitrification suivie d'une dénitrification. La nitrification est une réaction d'oxydation par des bactéries autotrophes, de l'azote ammoniacal ou ammonium, aussi connu comme NH4 ou $NH_4^+$, en :

- azote nitreux, aussi connu comme nitrite, NO2 ou $NO_2^-$ ;
- puis azote nitrique, aussi connu comme nitrate, NO3 ou $NO_3^-$.

La dénitrification, consiste en une réduction en azote gazeux, connu comme $N_2$, par des bactéries hétérotrophes dénitrifiantes, des nitrites ou nitrates produits lors des réactions de nitrification.

De manière plus précise, la nitrification se compose de deux sous-étapes : une première étape de nitritation suivie d'une deuxième étape de nitratation. La nitritation consiste en l'oxydation de l'ammonium en nitrite par des bactéries autotrophes nitritantes, connues comme AOB ou « Ammonia Oxidizing Bacteria » dont le genre prédominant est *Nitrosomonas.* La nitratation consiste en l'oxydation du nitrite en nitrate par d'autres bactéries autotrophes, connues comme NOB ou « Nitrite Oxidizing Bacteria » dont le genre prédominant est *Nitrobacter.*

La dénitrification peut également se décomposer en deux sous étapes : une étape de dénitratation qui va transformer les nitrates en nitrite, et une étape de dénitritation qui va transformer ces nitrites en azote gazeux.

Pour réduire la quantité d'énergie utilisée pour le traitement de l'azote, d'autres voies métaboliques peuvent être envisagées: la nitritation-dénitritation et la dé-ammonification.

Le procédé de nitritation-dénitritation cherche à stopper l'oxydation de l'azote au stade des nitrites en évitant la production de nitrates, d'où le shunt de la « partie Nitrate » du cycle.

Pour mettre en oeuvre la nitritation-dénitritation, il faut donc réprimer les NOB au profit des AOB. Ce procédé permet une économie de 25% sur le besoin en oxygène et de 40 % sur le besoin en Carbone.

Un autre procédé, appelé dé-ammonification ou nitritation partielle/anammox utilise des bactéries dites Anammox pour « ANaerobic AMMonium, Oxidation » qui ont la particularité de pouvoir transformer les nitrites et l'ammonium en $N_2$, en condition anoxie, sans besoin de carbone externe. Le procédé de dé-ammonification par Anammox met en oeuvre une nitritation partielle de l'ammonium. Il faut transformer environ 57% de l'ammonium en nitrite pour pouvoir effectuer une dé-ammonification complète.

La répression des NOB a été largement étudiée. Toutefois, à ce jour, la mise en oeuvre de cette répression dans le traitement de l'azote contenu dans les effluents par la nitritation-dénitritation et la dé-ammonification n'est pas optimisée et reste délicate à mettre en oeuvre.

Les documents US 5 863 435 et US 6 383 390 décrivent des procédés de traitement d'eaux fortement chargées en ammonium dans lesquels il n'y a pas de rétention des boues, le temps de séjour hydraulique étant identique au temps de séjour des boues. Le document US 2014/0069863 décrit un procédé de traitement d'eaux faiblement chargées en ammonium mettant en oeuvre des conditions d'anoxie transitoire contrôlée et une concentration résiduelle en ammonium pour maintenir un taux d'oxydation élevé par les AOB en réprimant les NOB.

L'invention vise à optimiser le traitement de l'azote par la nitritation-dénitritation et la dé-ammonification en fournissant un procédé de nitritation qui réprime efficacement l'activité des NOB et permet ainsi de minimiser la production de nitrates par rapport à la production de nitrites, c'est-à-dire de bloquer l'oxydation de l'azote sous forme d'ammonium, au stade des nitrites.

En conséquence, la présente invention a pour objet un procédé de traitement biologique de l'azote sous forme d'ammonium dans les eaux résiduaires par nitritation dans un réacteur biologique comprenant des bactéries oxydant l'ammonium et des bactéries oxydant les nitrites, ce réacteur étant un réacteur à boues activées à cultures microbiennes avec dissociation du temps de séjour hydraulique et du temps de séjour des boues, les eaux résiduaires étant des effluents urbains ou domestiques, le procédé, comprenant:

- au moins une étape **a** d'aération du réacteur biologique contenant l'eau résiduaire à traiter pour obtenir une concentration en oxygène dissous dans le réacteur égale ou supérieure à 2 mg/L, de manière à oxyder au moins une partie de l'ammonium en nitrites, par les bactéries oxydant l'ammonium présentes dans ledit réacteur,

**caractérisé en ce que** le procédé comprend en outre :

- au moins une étape **b** d'élimination d'au moins une partie des nitrites produits à l'étape **a** par:

  - un prélèvement **b1** d'eau traitée à l'étape **a** hors du réacteur, et/ou par
  - une transformation biologique **b2,** en anoxie mise en oeuvre par dénitritation hétérotrophe en présence de carbone et/ou dé-ammonification par Anammox,

  les étapes **a** et **b** étant mises en oeuvre de manière cyclique de sorte que la concentration en nitrites dans le réacteur au début de l'étape **a** soit inférieure à 2 mg de N-NO2/L ou au moins 2 fois inférieure à la concentration en ammonium dans le réacteur, et

- une étape **c** d'extraction d'une fraction des boues du réacteur résultant des étapes **a** et **b**, par unité de temps, calculée de façon à ce que l'on obtienne un âge de boues aérées effectif du réacteur qui est inférieur ou égal à un âge de boues aérées minimal théorique nécessaire à la nitrification tel que défini par une loi exponentielle décroissante en fonction de la température définie par l'équation : $A_{\text{théorique}} = A = SF \times 3,4 \times 1,103^{(15-T°C)}$, avec T°C la température en degrés Celsius et SF un facteur de correction de 1,45 à 1,8 selon la taille de station de traitement biologique de l'azote des effluents,

  de telle sorte que l'on minimise la production de nitrates, c'est-à-dire la nitratation, par rapport à la production de nitrites, c'est-à-dire la nitritation, dans le réacteur en réprimant l'activité des bactéries oxydant les nitrites, par ladite aération de l'étape **a,** ladite élimination de nitrites de l'étape **b** et ledit âge de boues aérées effectif de l'étape **c,** et les étapes **a, b** et **c** étant répétées jusqu'à ce que le rapport de la concentration en nitrites sur la somme des concentrations en nitrites et en nitrates à la fin de l'étape **a** d'aération soit supérieur à 0,8.

Dans la présente demande, les concentrations en nitrates, nitrites, ammonium sont exprimées sous la forme de la teneur en azote. A savoir, N-NO2, pour la concentration en nitrites ; N-NO3 pour la concentration en nitrates et N-NH4 pour la concentration en ammonium.

Par eau résiduaire, on entend tout type d'effluent urbain ou domestique contenant de l'azote au moins en partie sous forme d'ammonium.

L'eau résiduaire qui alimente le réacteur est une eau brute ou préalablement traitée, notamment par une étape de traitement du carbone.

Le réacteur biologique est un réacteur approprié à la nitrification, c'est-à-dire comprenant des bactéries oxydant l'ammonium, tel qu'un réacteur biologique classiquement utilisé pour le traitement de l'azote dans les effluents. Le réacteur biologique est dénommé réacteur de nitrification ou réacteur biologique de nitrification dans la présente demande. Ce réacteur comprend également des bactéries oxydant les nitrites, qui sont présentes dans les réacteurs biologiques de traitement de l'azote dans les effluents. Il s'agit selon l'invention d'un réacteur de boues activées à cultures microbiennes, avec dissociation du temps de séjour hydraulique et du temps de séjour des boues, lesdites boues étant notamment sous forme d'agrégats bactériens du type flocs ou granules.

Le réacteur peut être une cuve fermée ou un bassin ouvert. Le réacteur peut être un réacteur simple, c'est-à-dire contenant un seul bassin ou cuve, ou bien un réacteur multiple contenant plusieurs bassins ou cuves, éventuellement reliés entre eux, notamment pour permettre la recirculation de l'eau et/ou des boues.

L'alimentation du réacteur peut être continue, correspondant à un procédé en continu ou discontinue, correspondant à un procédé discontinu. Un réacteur à alimentation continue est notamment de type mélange intégral, flux piston, alimentation étagée ou chenal. Un réacteur à alimentation discontinue est notamment un réacteur biologique séquentiel ou réacteur batch séquencé, connu comme RBS ou SBR pour « Sequencing Batch Reactor », en particulier un réacteur batch séquencé à niveau constant.

Dans les différents modes de mise en oeuvre du procédé de l'invention, l'aération du réacteur, à savoir l'étape **a,** est avantageusement réalisée par injection ou insufflation d'oxygène gazeux dans le réacteur. L'oxygène peut être apporté sous forme pure ou avantageusement sous forme d'air qui, typiquement, comprend de l'ordre de 20% d'oxygène. Les moyens d'alimentation en oxygène peuvent être formés d'un ventilateur, surpresseur ou d'un compresseur apportant l'air dans le réacteur biologique. La concentration en oxygène dissous dans le réacteur au cours de l'étape **a** d'aération est une concentration moyenne qui résulte d'une aération continue ou discontinue du réacteur. Le débit d'air injecté dans le réacteur pendant l'étape d'aération est contrôlé de façon à ce que la concentration en oxygène dissous ou OD, dans le réacteur soit maintenue à une valeur moyenne égale ou supérieure à 2 mg/L. Le réacteur comprend avantageusement des moyens de mesure et éventuellement de régulation de la concentration en oxygène dissous dans le réacteur, tel que par exemple un capteur et/ou un analyseur d'oxygène dissous.

Le réacteur comprend avantageusement un mélangeur qui permet de brasser le réacteur pendant l'étape en anoxie, ou étape **b2,** et éventuellement également pendant l'étape d'aération, ou étape **a.**

La concentration en oxygène dissous, ou OD, dans le réacteur pendant l'étape **a** d'aération est égale ou supérieure à 2 ; 2,5 ; 3 ou 3,5 mg/L.

L'étape **a** permet une oxydation d'au moins une partie de l'ammonium, c'est-à-dire une nitritation au moins partielle. Une nitritation partielle est importante pour le traitement de l'azote par dé-ammonification. Pour obtenir une nitritation partielle on stoppe l'aération, ou étape **a,** lorsqu'une partie de l'ammonium a été oxydée en nitrites. Pour contrôler le pourcentage d'ammonium oxydé au cours de l'étape d'aération, le réacteur comprend avantageusement des moyens de mesure et éventuellement de régulation de la concentration en ammonium dans le réacteur, tel que par exemple un capteur et/ou un analyseur d'ammonium.

Dans les différents modes de mise en oeuvre du procédé de l'invention, le prélèvement **b1** d'eau traitée à l'étape **a,** hors du réacteur, mis en oeuvre pour l'élimination d'au moins une partie des nitrites produits à l'étape **a,** est avantageusement effectué par la vidange **b3** d'au moins une fraction du contenu du réacteur résultant de l'étape **a** et/ou la recirculation **b4** d'au moins une fraction du contenu du réacteur résultant de l'étape **a** vers un second réacteur biologique qui alimente le premier. Ladite fraction est soit une fraction brute constituée de boues non-décantées, soit une fraction clarifiée par une étape préalable de décantation des boues entre l'étape **a** et l'étape **b.**

La vidange **b3** est généralement mise en oeuvre dans les procédés en discontinu utilisant des réacteurs de type SBR alors que la recirculation **b4** est mise en oeuvre dans des procédés continus utilisant tout type de réacteur, tel que notamment une cuve fermée ou un bassin ouvert, par un exemple un bassin ouvert de type chenal. L'élimination biologique des nitrites à l'étape **b2** consiste en la transformation biologique, en anoxie, des nitrites en azote gazeux. La transformation biologique **b2** des nitrites en anoxie est mise en oeuvre dans le réacteur biologique de nitritation, ou réacteur principal ou premier réacteur, ou dans un autre réacteur biologique, dénommé réacteur biologique de traitement des nitrites, second réacteur ou réacteur annexe. Cette transformation biologique **b2** des nitrites en anoxie est avantageusement mise en oeuvre par dénitritation hétérotrophe en présence de carbone et/ou dé-ammonification par Anammox.

En outre, le prélèvement **b1** et la transformation biologique **b2** sont avantageusement combinés.

Selon un premier mode de mise en oeuvre avantageux du procédé, l'élimination d'au moins une partie des nitrites produits à l'étape **a** est réalisée par une transformation biologique **b2** en anoxie et la séquence des étapes **a** et **b2** est répétée de façon cyclique dans le réacteur biologique de nitritation. Les nitrites produits au cours de l'étape **a** d'un cycle, appelé cycle n, sont éliminés au cours de l'étape **b2** en anoxie, de sorte que la concentration en nitrites ou N-NO$_2$, dans le réacteur au début de l'étape **a** du cycle suivant, appelé aussi cycle n+1, est inférieure à 2 mg de N-NO2/L ou au moins 2 fois inférieure à la concentration en ammonium, ou N-NH4, dans le réacteur. Ce mode de mise en oeuvre est préféré pour les procédés continus utilisant tout type de réacteur à alimentation continue, tel que notamment un réacteur constitué d'une ou plusieurs cuves fermées ou d'un ou plusieurs bassins ouverts, par exemple un réacteur constitué d'un bassin ouvert de type chenal.

Selon un second mode de mise en oeuvre avantageux du procédé, l'élimination d'au moins une partie des nitrites produits à l'étape **a** est réalisée par la recirculation **b4** d'au moins une fraction du contenu du réacteur résultant de l'étape **a** vers un second réacteur biologique qui alimente le premier et par la transformation biologique **b2** en anoxie des nitrites de ladite fraction dans ledit second réacteur. La fraction du contenu du réacteur qui est recirculée à l'étape **b4** est de préférence une fraction non clarifiée. Le réacteur biologique de traitement des nitrites ou second réacteur ou réacteur annexe, peut être alimenté en eau brute, ainsi qu'en boues contenant de l'eau chargée en nitrites issue du réacteur de nitritation ou réacteur principal ou premier réacteur. Le second réacteur élimine les nitrites par une transformation biologique, en particulier par dénitritation hétérotrophe en présence de carbone. En conséquence, les boues traitées en sortie du second réacteur qui alimentent le réacteur de nitritation ont une concentration en nitrites inférieure à 2 mg de N-NO2/L ou au moins 2 fois inférieure à la concentration en ammonium ou N-NH4. Ce mode de mise en oeuvre est préféré pour les procédés continus utilisant tout type de réacteur à alimentation continue, tel que notamment un réacteur constitué d'une ou plusieurs cuves fermées ou d'un ou plusieurs bassins ouverts, par exemple un réacteur constitué d'un bassin ouvert de type chenal.

Selon un troisième mode de mise en oeuvre avantageux du procédé, l'élimination d'au moins une partie des nitrites produits à l'étape **a** est réalisée par la vidange **b3** d'au moins une fraction du contenu du réacteur résultant de l'étape **a** et la transformation biologique **b2** en anoxie de la fraction restant éventuellement dans ledit réacteur biologique. De préférence, la fraction du contenu du réacteur qui est vidangée à l'étape **b3** est une fraction clarifiée par une étape préalable de décantation des boues entre l'étape **a** et l'étape **b3.**

Lorsque la vidange du contenu du réacteur est totale, il n'y a pas de fraction restant dans le réacteur et l'étape de transformation biologique **b2** est omise.

Les étapes **a** et **b3** ou **a, b3** et **b2** sont répétées de façon cyclique dans le réacteur biologique de nitritation. Les nitrites produits au cours de l'étape **a** d'un cycle ou cycle n sont éliminés, soit en totalité au cours de l'étape de vidange **b3,** soit en en partie au cours de l'étape de vidange **b3** et en partie au cours de l'étape de transformation biologique **b2** en anoxie, de sorte que la concentration en nitrites dans le réacteur au début de l'étape a du cycle suivant ou cycle n+1 est inférieure à 2 mg de N-NO2/L ou au moins 2 fois inférieure à la concentration en ammonium dans le réacteur.

Le troisième mode de mise en oeuvre est préféré pour les procédés discontinus utilisant un réacteur batch séquencé ou SBR, notamment un réacteur SBR caractérisé par une alimentation et une vidange simultanées, en particulier une alimentation et une vidange simultanées à niveau constant.

La fraction, de préférence clarifiée, du contenu du réacteur qui est vidangée à l'étape **b3** est avantageusement évacuée dans un second réacteur biologique et les nitrites présents sont éliminés par une transformation biologique **b2** en anoxie, par dénitritation hétérotrophe en présence de carbone et/ou dé-ammonification par Anammox, de préférence par dé-ammonification par Anammox.

Pour contrôler l'élimination des nitrites à l'étape **b** et vérifier la concentration en nitrites ou le rapport des concentrations en ammonium et en nitrites au début de l'étape **a** d'aération, le réacteur comprend avantageusement des moyens de mesure et éventuellement de régulation de la concentration en nitrites dans le réacteur, éventuellement associés à des moyens de mesure et éventuellement de régulation de la concentration en ammonium dans le réacteur, tel que par exemple un capteur et/ou un analyseur de nitrites, éventuellement associé à un capteur et/ou un analyseur d'ammonium.

En outre, pour contrôler la production relative de nitrites et de nitrates, c'est à dire la production majoritaire de nitrites par rapport à la production minoritaire de nitrates, au cours de l'étape **a** d'aération, le réacteur comprend avantageusement des moyens de mesure et éventuellement de régulation de la concentration en nitrates dans le réacteur, tel que par exemple un capteur et/ou un analyseur de nitrates.

Dans les différents modes de mise en oeuvre du procédé de l'invention, l'étape c d'extraction d'une fraction de boues du réacteur résultant des étapes **a** et **b**, par unité de temps, est calculée de façon à ce que l'on obtienne au terme du traitement des étapes **a** et **b**, un âge de boues aérées effectif du réacteur qui est inférieur ou égal à un âge de boues aérées minimal théorique nécessaire à la nitrification tel que défini par une loi exponentielle décroissante en fonction de la température. Ladite fraction de boues qui est extraite à l'étape **c** est notamment une fraction massique.

L'âge de boues aérées effectif du réacteur, ou A$_{effectif}$, représente le temps de séjour en aération des boues dans le réacteur. Il correspond au rapport de la quantité de boues présentes en kg de matière sèche ou MS dans le réacteur biologique sur la quantité de boues en excès ou E à évacuer par jour, en kg MS/j .

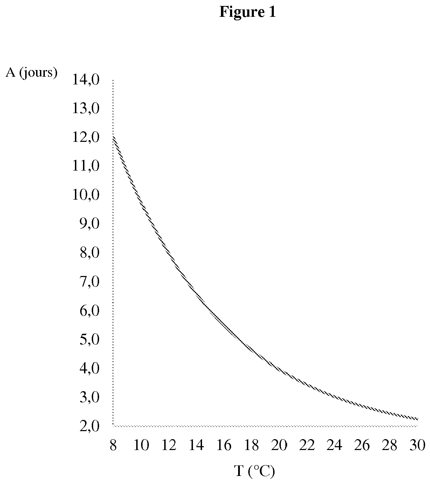

L'âge de boues aérées minimal théorique, ou A$_{théorique}$, nécessaire à la nitrification est notamment défini par la courbe de la figure 1. Selon l'invention, il est défini par l'équation établie par l'ATV ou « Abwasser Technische Vereinigung e.V. » :

$$A_{théorique} = A = SF \times 3,4 \times 1,103^{(15-T°C)}$$

avec T°C la température en degrés Celsius et SF un facteur de correction de 1,45 à 1,8 selon la taille de station de traitement biologique de l'azote des effluents.

L'étape **c** est avantageusement mise en oeuvre en extrayant par unité de temps, par exemple chaque jour, une fraction massique déterminée des boues du réacteur, pour finalement obtenir ledit âge de boues aérées effectif, comme illustré dans les exemples.

L'âge de boues aérées effectif du réacteur est avantageusement compris entre 50 % et 90 %, de préférence entre 60 % et 80 % de l'âge de boues aérées minimal théorique.

Les étapes **a, b** et **c** du procédé selon l'invention sont répétées jusqu'à ce que le rapport de la concentration en nitrites ou [N-NO2] sur la somme des concentrations en nitrites et en nitrates ou [N-NO2]+ [N-NO3] à la fin de l'étape **a** d'aération soit égal ou supérieur à 0,8 ou 80 % lorsque ce rapport est exprimé en pourcentage, de préférence égal ou supérieur à 0,9 ou 90 %. Le rapport des concentrations [N-NO2]/ ([N-NO2]+ [N-NO3]) peut être remplacé par le rapport de la variation des concentrations Δ[N-NO2]/ (Δ[N-NO2] + Δ[N-NO3]) au cours de l'étape **a** d'aération. Lorsque le rapport de la concentration en nitrites sur la somme des concentrations en nitrites et en nitrates atteint une valeur égale ou supérieure à 0,8 ou 80 %, on considère que la répression des NOB et le blocage de l'oxydation de l'azote sous forme d'ammonium au stade des nitrites - c'est-à-dire à l'étape de nitritation - qui y est associée sont établis dans le réacteur biologique. Après cette phase d'établissement, la nitritation peut être poursuivie dans les mêmes conditions ou bien dans des conditions moins répressives, pendant la phase de maintien. Des conditions moins répressives sont obtenues en diminuant la concentration en oxygène dissous à l'étape **a,** en supprimant l'étape **b** d'élimination de nitrites et/ou en modifiant l'étape c d'extraction de boues, de sorte que l'âge de boues aérées effectif du réacteur soit supérieur ou égal à l'âge de boues aérées minimal théorique tel que défini précédemment.

Le procédé biologique de traitement de l'azote sous forme d'ammonium par nitritation selon l'invention est avantageusement mis en oeuvre sans ensemencement préalable du réacteur biologique de nitritation en bactéries nitritantes.

Le procédé biologique de traitement de l'azote sous forme d'ammonium par nitritation selon l'invention qui réprime efficacement l'activité des NOB et permet ainsi de bloquer l'oxydation de l'azote au stade des nitrites est avantageusement utilisé dans un procédé de traitement de l'azote des eaux résiduaires par la nitritation-dénitritation et/ou la dé-ammonification.

En conséquence, il est également décrit un procédé de traitement biologique de l'azote sous forme d'ammonium des eaux résiduaires par la nitritation-dénitritation et/ou la dé-ammonification, dans lequel la nitritation de l'azote sous forme d'ammonium est mise en oeuvre par le procédé de traitement biologique de l'azote par nitritation tel que défini ci-dessus.

Outre les dispositions qui précèdent, l'invention comprend encore d'autres dispositions, qui ressortiront de la description qui va suivre, qui se réfère à des exemples de mise en oeuvre de l'objet de la présente invention qui ne sont nullement limitatifs, avec référence aux dessins annexés dans lesquels :

- la figure 1 représente la courbe exponentielle décroissante de l'âge de boues aérées minimal théorique nécessaire à la nitrification ou A en jours en fonction de la température T en °C.

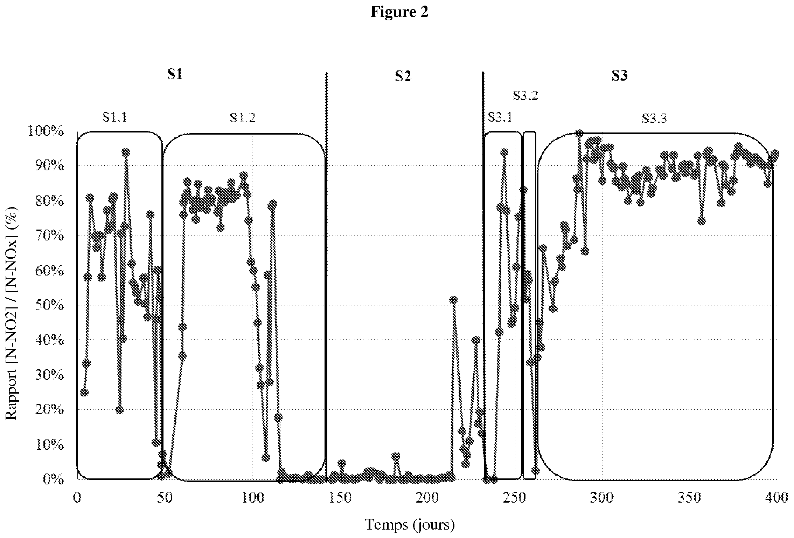

- la figure 2 représente l'effet de la concentration en oxygène dissous pendant la phase d'aération, de l'élimination des nitrites avant la phase d'aération suivante et de l'âge de boues aérées effectif sur l'établissement de la nitritation, mesuré par l'évolution au cours du temps en jours, du rapport [N-NO2]/[N-NOx] à la fin de l'étape d'aération, dans un réacteur biologique de traitement de l'azote des eaux résiduaires par nitritation-dénitritation, à alimentation continue.

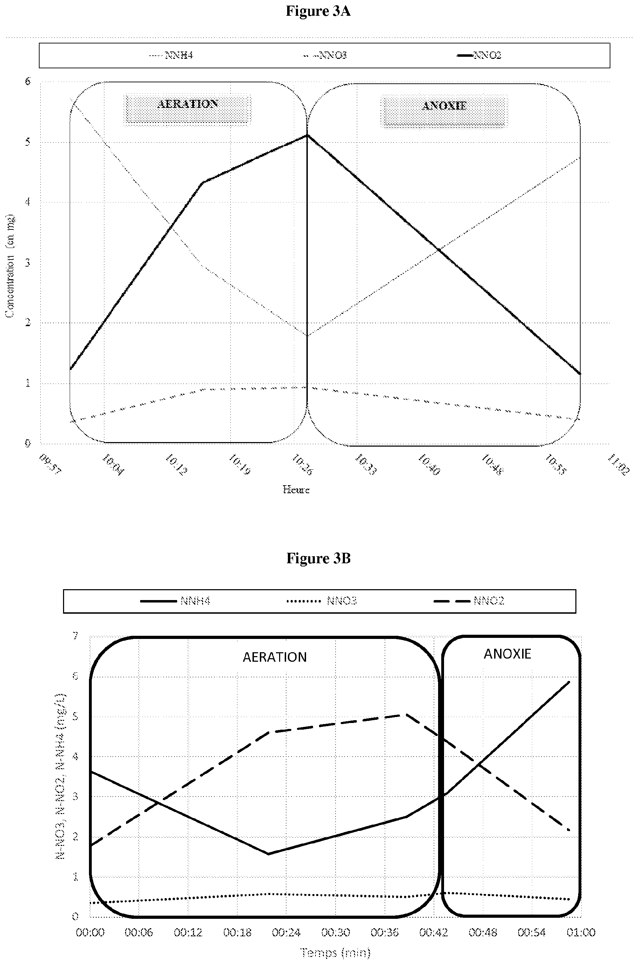

- la figure 3 représente l'évolution des concentrations en ammonium, N-NH4, nitrites, N-NO2 et nitrates, N-NO3, au cours des étapes d'aération et en anoxie, après l'établissement de la nitritation-dénitritation dans le réacteur biologique de la figure 2, correspondant à la phase S3.3. Les mesures ont été effectuées à deux moments différents. **A.** La concentration en N-NO2 au début de l'étape d'aération est inférieure à 2 mg /L. **B**. La concentration en N-NO2 au début de l'étape d'aération est au moins deux fois inférieure à la concentration en N-NH4.

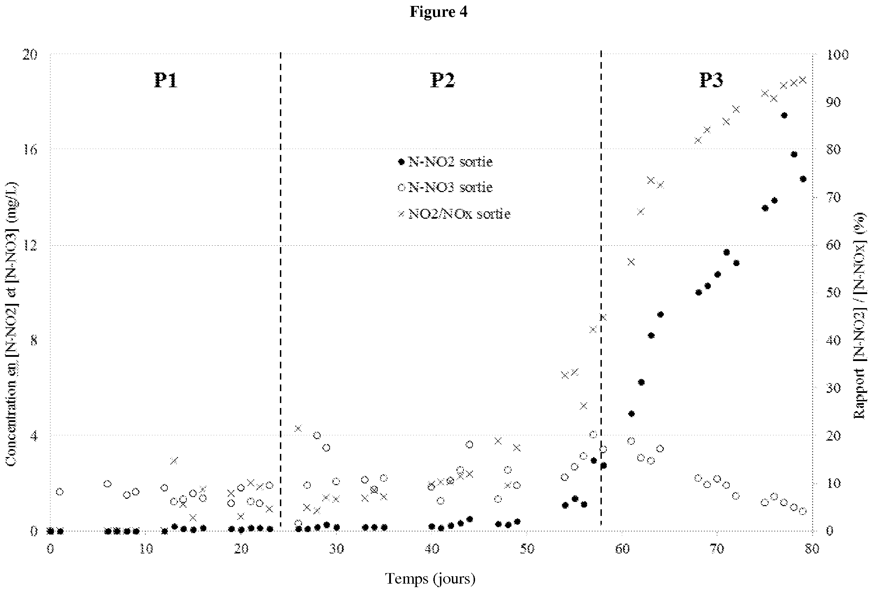

- la figure 4 représente l'effet de la concentration en oxygène dissous pendant la phase d'aération, de l'élimination des nitrites et de l'âge de boues aérées effectif sur l'établissement de la nitritation, mesuré par l'évolution au cours du temps, du rapport [N-NO2]/ ([N-NO2] + [N-NO3]) ou [N-NOx] dans l'eau de sortie, dans un réacteur biologique de traitement de l'azote des eaux résiduaires par nitritation-dénitritation, à alimentation discontinue (réacteur SBR).

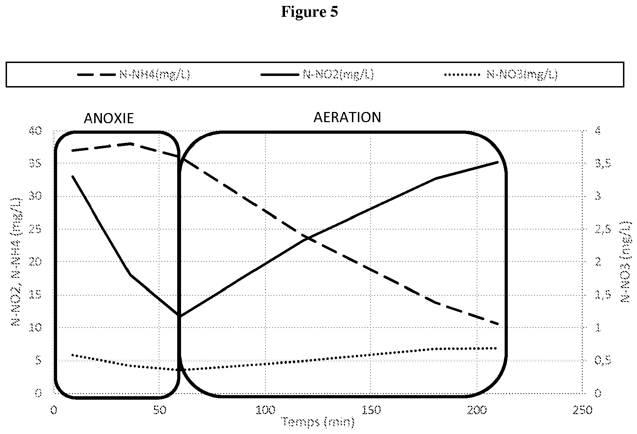

- la figure 5 représente l'évolution des concentrations en ammonium, N-NH4, nitrites, N-NO2 et nitrates, N-NO3, au cours des étapes d'aération et en anoxie, après l'établissement de la nitritation-dénitritation dans le réacteur biologique de la figure 4, correspondant à la deuxième moitié de la phase P3 (temps > 70 jours). La concentration en N-NO2 au début de l'étape d'aération est au moins deux fois inférieure à la concentration en N-NH4.

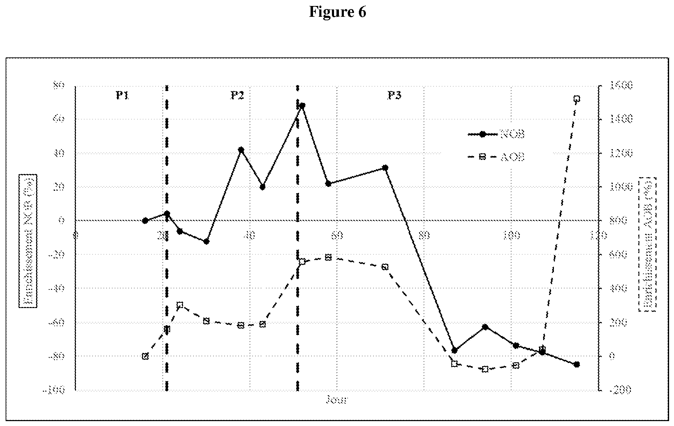

- la figure 6 représente l'effet de la concentration en oxygène dissous pendant la phase d'aération, de l'élimination des nitrites et de l'âge de boues aérées effectif sur l'évolution des populations nitrifiantes (AOB et NOB) des boues activées. Les résultats sont issus d'analyse de biologie moléculaire par qPCR (quantitative Polymerase Chain Reaction) permettant de quantifier l'ADN de chaque population microbienne considérée. Les résultats sont exprimés en pourcentage d'enrichissement (ou appauvrissement si inférieur à 0) de ladite population par rapport à une date de départ, à savoir le jour 16 (Période 1).

## EXEMPLE 1 : Etablissement et maintien de la nitritation par répression des NOB dans un réacteur de nitritation-dénitritation à alimentation continue

Le système de traitement biologique de l'azote des effluents est composé de deux réacteurs biologiques à boues activées respectivement de 4 et 8,9 $m^3$ et d'un clarificateur de 10,6 $m^3$, alimentés en continu à 2 $m^3$/h, par des eaux résiduaires urbaines préalablement traitées pour éliminer le carbone particulaire et colloïdal. Les réacteurs biologiques sont équipés d'un mélangeur, d'un système d'aération et de moyens de mesure et de régulation de la concentration en oxygène dissous, ainsi que de moyens de mesure des concentrations en nitrites, en nitrates et en ammonium. Le traitement de l'azote sous forme d'ammonium a démarré sans ensemencement préalable du réacteur biologique. L'effet de la concentration en oxygène dissous pendant la phase d'aération, de l'élimination des nitrites avant la phase d'aération et de l'âge de boues aérées effectif sur la répression de NOB et l'établissement de la nitritation dans le réacteur ont été testées au cours du temps, selon le schéma expérimental suivant :

- phase S1 :
Démarrage de l'installation sans ensemencement pour éviter d'avoir des NOB et ne former que des AOB en phase S1.1 puis vidange de l'installation en phase S1.2 et redémarrage sans ensemencement.

- phase S2 :
Application des paramètres classiques de nitritation avec une concentration en oxygène dissous faible, de l'ordre de 0,35 mg/L et pas de contrôle d'âge de boues aérées ni d'aération séquencée pour éliminer les nitrites produits. Par contrôle on entend le maintien du système à un âge de boue aérée fixe par modulation du volume d'extraction de boue.

- phase S3:
Mise en place des trois paramètres avec une aération séquencée constituée de cycles successifs d'une étape d'aération de 30 min et d'une étape en anoxie de 30 min. La concentration en oxygène dissous dans le réacteur au cours de la phase d'aération est initialement de 1 mg/L en phase S3.1 puis elle est diminuée à 0,6 mg/l en phase S3.2 et ensuite augmentée à 2,5 mg/L en phase S3.3. L'extraction de boues est effectuée quotidiennement, pour obtenir un âge de boues aérées effectif égal à 70 % de l'âge de boues aérées minimal théorique nécessaire à la nitrification.

Au démarrage en phase S1, qui a été effectué sans ensemencement, on observe une phase de nitritation avec un rapport [N-NO2]/ [N-NOx] d'environ 80 %, liée à l'expression des AOB. En l'absence, d'une gestion des populations bactériennes par une extraction de boues maîtrisée et de l'élimination du nitrite avant la phase d'aération, la nitritation seule est rapidement perdue. Une vidange de l'installation en phase S1.2 et redémarrage permet de rapidement retrouver une nitritation, mais ensuite la nitratation prend le dessus. La répression des NOB n'est pas effective. En phase S3, la gestion des extractions de boue couplée à une concentration en oxygène dissous de 1 mg/L en phase S3.1 et une aération séquencée pour éliminer les nitrites formés par les bactéries hétérotrophes permet une mise en place de la nitritation après 2 à 3 âges de boue aérée effectifs. En phase S3.2, un essai avec une concentration en oxygène dissous de 0,6 mg/l a pour conséquence immédiate une nitratation des nitrites et donc une expression des NOB. Une fois la concentration en oxygène dissous augmentée à 2,5 mg/L à partir de la phase S3.3, la nitritation se réinstalle après la mise en place de la répression des NOB et se maintient de manière pérenne, sur plusieurs mois avec un rapport [N-NO2]/ [N-NOx] égal ou supérieur à 85 %.

L'établissement d'une répression effective des NOB dans le réacteur biologique s'accompagne d'un blocage de l'oxydation de l'ammonium aux stades des nitrites qui se traduit par une production minimale de nitrates par rapport à la production de nitrites pendant l'étape d'aération. En conséquence, la mesure du rapport de la concentration en nitrites sur la somme des concentrations en nitrites et en nitrates à la fin de l'étape d'aération permet d'étudier l'établissement d'une répression effective des NOB dans le réacteur biologique. Ce rapport a été mesuré dans le réacteur biologique au cours du temps, dans les différentes conditions de nitritation mentionnées ci-dessus et les résultats sont présentés à la **Figure 2.**

L'évolution des concentrations en ammonium, nitrites et nitrates dans le réacteur ont été réalisées à deux moments différents au cours de la phase S3.3 d'établissement et de maintien de la répression des NOB. Les résultats présentés à la **Figure 3A** et **3B** montrent que pendant la phase d'aération, l'ammonium est transformé en nitrites ; la concentration en ammonium dans le réacteur diminue et celle des nitrites, initialement faible, inférieure à 2 mg de N-NO2/L **(Figure 3A)** ou au moins deux fois inférieure à la concentration en ammonium N-NH4 **(Figure 3B),** augmente. En revanche, la concentration en nitrates ne varie pas au cours de la phase d'aération et reste à une valeur faible, inférieure à < 1 mg/L **(Figure 3A** et **3B).** Le rapport [N-NO2]/ [N-NOx] à la fin de l'étape d'aération est supérieur à 0,8 **(Figure 3A** et **3B).** En phase anoxique, on observe une diminution des nitrites qui sont éliminés par les hétérotrophes, en présence du carbone apporté par l'eau brute. A la fin de la phase en anoxie, la concentration en nitrites est faible, inférieure à 2 mg de N-NO2/L **(Figure 3A)** ou au moins deux fois inférieure à la concentration en ammonium N-NH4 **(Figure 3B).** Les étapes en aération et en anoxie étant répétées de façon cyclique, la concentration en nitrites au début de la phase d'aération du cycle suivant est donc également faible, inférieure à 2 mg de $N-NO_2$/L ou au moins deux fois inférieure à la concentration en ammonium N-NH4. L'élimination des nitrites limite la croissance des NOB étant donné qu'ils n'ont pas de substrat disponible lorsque l'oxygène est présent. En couplant l'élimination des nitrites avec l'extraction de boues, on finit par lessiver les NOB du réacteur.

**EXEMPLE 2 : Etablissement et maintien de la nitritation par répression des NOB dans un réacteur de nitritation-dénitritation SBR à alimentation discontinue**

Le réacteur biologique est un réacteur à boues activées de type SBR à niveau constant alimenté en discontinu à 13,7 m³/j, par des eaux résiduaires urbaines préalablement traitées pour éliminer le carbone particulaire et colloïdal ainsi que les matières en suspension. Les dimensions du réacteur sont les suivantes : diamètre : 1,2 m ; surface : 1,13 m²; hauteur totale : 4 m ; hauteur d'eau 3,18 m : volume 3,6 m³). Le réacteur est équipé d'un mélangeur, d'un système d'aération et de moyens de mesure et de régulation de la concentration en oxygène dissous, ainsi que de moyens de mesure des concentrations en nitrites, en nitrates et en ammonium. Le traitement de l'azote est mis en oeuvre par des cycles successifs de la séquence des 4 étapes suivantes : une étape d'alimentation et de vidange simultanée d'une durée de 60 min, une étape en anoxie de 30 min, une étape d'aération de 60 min et une étape de décantation de 60 min.

L'effet de la concentration en oxygène dissous pendant la phase d'aération, de l'élimination des nitrites avant la phase d'aération et de l'âge de boues aérées effectif sur la répression des bactéries NOB et l'établissement de la nitritation dans le réacteur ont été testées au cours du temps, selon le schéma expérimental suivant :

- Période 1 ou P1

Pendant cette période, la concentration en oxygène dissous pendant la phase d'aération est de 0,85 mg/L. 57 % du volume total du réacteur est renouvelé au moment de la vidange/alimentation. En conséquence, les nitrites produits au cours de l'étape d'aération sont éliminés, en partie par vidange du réacteur (57 %) et en partie (43%) par dénitritation par les bactéries hétérotrophes. Aucune extraction de boues n'est réalisée pendant cette période.

- Période 2 ou P2

Pendant cette période, la concentration en oxygène dissous pendant la phase d'aération est de 0,85 mg/L. L'élimination des nitrites produits au cours de l'étape d'aération est réalisée comme à la période 1. Une extraction de boues est réalisée de façon à ce que l'âge de boues aérées effectif du réacteur soit égal à 70 % de l'âge de boues aérées minimal théorique nécessaire à la nitrification à cette température.

- Période 3 ou P3

Pendant cette période, la concentration en oxygène dissous pendant la phase d'aération est de 3,5 mg/L. L'élimination des nitrites produits au cours de l'étape d'aération est réalisée comme à la période 1. Une extraction de boues est réalisée de façon à ce que l'âge de boues aérées effectif du réacteur soit égal à 70 % de l'âge de boues aérées minimal théorique nécessaire à la nitrification à cette température.
Le paragraphe ci-dessous donne un exemple de gestion de l'âge de boues en considérant les données de la Période 3. Dans cette période, la température était de 19°C dans le réacteur. L'application de la formule de l'ATV pour le calcul de l'âge de boues aérées minimal théorique pour permettre la nitrification donne :

$$1,8 \text{ x } 3,4 \text{ x } 1,103^{(15\text{-}19)} = 4,1 \text{ jours}$$

avec SF=1.8
En considérant un taux d'aération du réacteur de 30% (fraction de temps en aération sur le temps total), il est obtenu un âge de boues aérées minimal théorique ou $A_{\text{théorique}}$ de 13.8 jours. Le tableau suivant donne les âges de boues effectifs ($A_{\text{effectif}}$) sur quatre périodes d'une semaine. Les âges de boues effectifs sont calculés selon la définition donnée en page 7 ligne 20.

|  | Poids de boues moyen (kgMS) | Boues évacuées (kgMS/j) | Volume extrait (L/j) | $A_{\text{effectif}}$ (j) | $A_{\text{effectif}}/A_{\text{théorique}}$ (%) |
|---|---|---|---|---|---|
| **Semaine 1** | 6.2 | 0.54 | 319 | 11.3 | 82% |
| **Semaine 2** | 5.3 | 0.62 | 424 | 8.5 | 62% |
| **Semaine 3** | 5.6 | 0.59 | 385 | 9.4 | 68% |
| **Semaine 4** | 4.8 | 0.48 | 359 | 10.0 | 73% |

Les volumes extraits sont calculés en considérant le débit massique de boues évacuées (en kgMS/j) divisé par la concentration en boues dans le réacteur (rapport du poids de boues par le volume dudit réacteur).
Le rapport [N-NO2] / [N-NOx] dans le réacteur biologique à la fin de l'étape d'aération a été mesuré au cours du temps dans les différentes conditions de nitritation mentionnées ci-dessus et les résultats sont présentés à la **Figure 4.**
En l'absence d'une concentration suffisante en oxygène dissous au cours de l'étape d'aération ou d'une extraction de boues suffisante, la production de nitrites dans le réacteur est négligeable. En revanche, lorsque l'élimination des nitrites avant l'étape d'aération est combinée à une concentration suffisante en oxygène dissous au cours de l'étape d'aération et à une extraction de boues suffisante, on observe une production majoritaire de nitrites et une production minoritaire de nitrates avec un rapport [N-NO2] / [N-NOx] supérieur à 80 %.
L'évolution des concentrations en ammonium, nitrites et nitrates dans le réacteur ont été réalisées au cours de la phase d'établissement et de maintien de la répression des NOB (deuxième partie de la période P3, temps > 70 jours). Les résultats sont présentés à la **Figure 5.** En phase d'anoxie, on observe une diminution des nitrites qui sont éliminés par les hétérotrophes, en présence du carbone apporté par l'eau brute. A la fin de la phase en anoxie, la concentration en nitrites est faible, au moins deux fois inférieure à la concentration en ammonium N-NH4 **(Figure 5).** La phase d'anoxie étant suivie par une phase d'aération, la concentration en nitrites au début de la phase d'aération est donc également faible, au moins deux fois inférieure à la concentration en ammonium N-NH4 **(Figure 5).** Pendant la phase d'aération, l'ammonium est transformé en nitrites ; la concentration en ammonium dans le réacteur diminue et celle des nitrites, initialement faible, au moins deux fois inférieure à la concentration en ammonium N-NH4, augmente

**(Figure 5).** En revanche, la concentration en nitrates ne varie pas au cours de la phase d'aération et reste à une valeur faible, inférieure à < 1 mg/L **(Figure 5).** Le rapport [N-NO2]/ [N-NOx] à la fin de l'étape d'aération est supérieur à 0,8 **(Figure 5).** L'élimination des nitrites limite la croissance des NOB étant donné qu'ils n'ont pas de substrat disponible lorsque l'oxygène est présent.

En couplant l'élimination des nitrites avec l'extraction de boues, on finit par lessiver les NOB du réacteur, comme en témoigne la **Figure 6**. Il apparaît que durant les deux premières périodes, les deux populations microbiennes, AOB et NOB, bien qu'ayant des tendances similaires à la hausse, témoignent d'amplitudes d'évolution différentes. En effet, en fin de P2, la population NOB a augmenté de 60% par rapport à la date de départ (Jour 16 (Période 1)), contre une hausse de 550% pour AOB. Par ailleurs, durant la troisième période, la concomitance des trois paramètres concentration en oxygène dissous pendant la phase d'aération, de l'élimination des nitrites et gestion de l'âge de boues aérées effectif, permet un lessivage drastique de la population NOB. Au jour 115, 85% de la population nitratante a ainsi été lessivée. Dans le même temps, la quantité de AOB a été multipliée par 16. Les conditions opératoires ont donc généré une modification de la communauté microbienne en faveur de la population AOB, permettant la mise en place de nitritation dans le réacteur biologique.

## Revendications

1. Procédé de traitement biologique de l'azote sous forme d'ammonium dans les eaux résiduaires par nitritation dans un réacteur biologique comprenant des bactéries oxydant l'ammonium et des bactéries oxydant les nitrites, ce réacteur étant un réacteur à boues activées à cultures microbiennes avec dissociation du temps de séjour hydraulique et du temps de séjour des boues, les eaux résiduaires étant des effluents urbains ou domestiques contenant de l'azote au moins en partie sous forme d'ammonium, le procédé comprenant :

   • au moins une étape **a** d'aération contrôlée du réacteur biologique contenant l'eau résiduaire à traiter pour maintenir la concentration en oxygène dissous dans le réacteur à une valeur moyenne égale ou supérieure à 2 mg/L, de manière à oxyder au moins une partie de l'ammonium en nitrites par les bactéries oxydant l'ammonium présentes dans ledit réacteur,

   **caractérisé en ce que** le procédé comprend en outre :

   • au moins une étape **b** d'élimination d'au moins une partie des nitrites produits à l'étape a par :

      - un prélèvement **b1** d'eau traitée à l'étape a hors du réacteur, et/ou par
      - une transformation biologique **b2,** en anoxie, mise en oeuvre par dénitritation hétérotrophe en présence de carbone et/ou dé-ammonification par Anammox,

   les étapes a et **b** étant mises en oeuvre successivement et de manière cyclique de sorte que la concentration en nitrites dans le réacteur au début de l'étape **a** soit inférieure à 2 mg de N-NO2 /L ou au moins 2 fois inférieure à la concentration en ammonium dans le réacteur, et
   • une étape **c** d'extraction d'une fraction des boues du réacteur résultant des étapes **a** et **b**, par unité de temps, calculée de façon à ce que l'on obtienne un âge de boues aérées effectif du réacteur qui est inférieur ou égal à un âge de boues aérées minimal théorique nécessaire à la nitrification tel que défini par une loi exponentielle décroissante en fonction de la température définie par l'équation : $A_{théorique} = A = SF \times 3,4 \times 1,103^{(15-T°C)}$, avec T°C la température en degrés Celsius et SF un facteur de correction de 1,45 à 1,8 selon la taille de station de traitement biologique de l'azote des effluents, de telle sorte que l'on minimise la production de nitrates par rapport à la production de nitrites dans le réacteur en réprimant l'activité des bactéries oxydant les nitrites par ladite aération de l'étape **a,** ladite élimination de nitrites de l'étape **b** et ledit âge de boues aérées effectif de l'étape **c** ; et

   les étapes **a, b** et **c** étant répétées jusqu'à ce que le rapport de la concentration en nitrites sur la somme des concentrations en nitrites et en nitrates à la fin de l'étape **a** d'aération soit supérieur à 0,8.

2. Procédé selon la revendication 1, **caractérisé en ce que** le prélèvement **b1** d'eau traitée à l'étape **a,** hors du réacteur, est effectué par la vidange **b3** d'au moins une fraction du contenu du réacteur résultant de l'étape **a** et/ou la recirculation **b4** d'au moins une fraction du contenu du réacteur résultant de l'étape **a** vers un second réacteur biologique qui alimente le premier.

3. Procédé selon l'une quelconque des revendications 1 ou 2, **caractérisé en ce que** l'élimination d'au moins une partie des nitrites produits à l'étape **a** est réalisée par une transformation biologique **b2** en anoxie et la séquence des étapes **a** et **b2** étant répétée de façon cyclique dans ledit réacteur biologique.

4. Procédé selon l'une quelconque des revendications 1 ou 2, caractérisé en ce l'élimination d'au moins une partie des nitrites produits à l'étape **a** est réalisée par la recirculation **b4** d'au moins une fraction du contenu du réacteur résultant de l'étape a vers un second réacteur biologique qui alimente le premier et par la transformation biologique **b2** en anoxie de ladite fraction dans ledit second réacteur.

5. Procédé selon l'une quelconque des revendications 1 ou 2, **caractérisé en ce que** l'élimination d'au moins une partie des nitrites produits à l'étape **a** est réalisée par la vidange **b3** d'au moins une fraction du contenu du réacteur résultant de l'étape **a** et la transformation biologique b2 en anoxie de la fraction restant éventuellement dans ledit réacteur biologique.

6. Procédé selon une des revendications précédentes, **caractérisé en ce que** l'âge de boues aérées effectif dudit au moins un réacteur est compris entre 50 % et 90 %, de préférence entre 60 % et 80 % de l'âge de boues aérées minimal théorique.

7. Procédé selon une des revendications précédentes, **caractérisé en ce que** les étapes **a, b** et **c** sont répétées jusqu'à ce que le rapport de la concentration en nitrites sur la somme des concentrations en nitrites et en nitrates à la fin de l'étape **a** d'aération soit supérieur à 0,9.

## Patentansprüche

1. Verfahren zur biologischen Behandlung von Stickstoff in Form von Ammonium in Abwässern durch Nitritation in einem biologischen Reaktor, der Ammoniumoxidierende Bakterien und Nitrit-oxidierende Bakterien aufweist, wobei dieser Reaktor ein Belebtschlammreaktor mit mikrobiellen Kulturen mit Dissoziation der hydraulischen Verweilzeit und der Verweilzeit des Schlamms ist, wobei die Abwässer städtische oder häusliche Abwässer sind, die Stickstoff zumindest teilweise in Form von Ammonium enthalten, wobei das Verfahren umfasst:

- mindestens einen Schritt a der kontrollierten Belüftung des biologischen Reaktors, der das zu behandelnde Abwasser enthält, um die Konzentration an gelöstem Sauerstoff im Reaktor auf einem Durchschnittswert von 2 mg/L oder mehr zu halten, so dass mindestens ein Teil des Ammoniums durch die in dem Reaktor vorhandenen Ammonium-oxidierenden Bakterien zu Nitriten oxidiert wird,

**dadurch gekennzeichnet, dass** das Verfahren außerdem umfasst:

- mindestens einen Schritt **b** zur Entfernung mindestens eines Teils der in Schritt **a** erzeugten Nitrite durch:

- einer Entnahme **b1** des in Schritt **a** behandelten Wassers aus dem Reaktor, und/oder durch
- einer biologischen Umwandlung **b2** unter Anoxie, die durch heterotrophe Denitratation in Gegenwart von Kohlenstoff und/oder Deammonifikation durch Anammox durchgeführt wird, wobei die Schritte **a** und **b** nacheinander und zyklisch durchgeführt werden, so dass die Nitritkonzentration im Reaktor zu Beginn von Schritt **a** unter 2 mg N-NO2/L oder mindestens zweimal niedriger als die Ammoniumkonzentration im Reaktor ist, und

- einen Schritt **c** zum Extrahieren einer Fraktion des Reaktorschlamms, die aus den Schritten **a** und **b** resultiert, pro Zeiteinheit, die so berechnet wird, dass ein effektives Alter des belüfteten Schlamms im Reaktor erreicht wird, das kleiner oder gleich einem theoretischen minimalen Alter des belüfteten Schlamms ist, das für die Nitrifikation erforderlich ist, wie es durch ein abnehmendes Exponentialgesetz in Abhängigkeit von der Temperatur definiert wird, das durch die Gleichung definiert wird:

$A_{theoretisch} = A = SF \times 3,4 \times 1,103^{(15-T°C)}$, wobei T°C die Temperatur in Grad Celsius und SF ein Korrekturfaktor von 1,45 bis 1,8 ist, je nach Größe der Anlage zur biologischen Stickstoffbehandlung des Abwassers,
so dass die Nitratproduktion im Verhältnis zur Nitritproduktion im Reaktor minimiert wird, indem die Aktivität der Nitrit-oxidierenden Bakterien durch die Belüftung in Schritt **a,** die Nitritentfernung in Schritt **b** und das effektive Alter des belüfteten Schlamms in Schritt **c** unterdrückt wird; und
wobei die Schritte **a, b** und **c** so lange wiederholt werden, bis das Verhältnis der Nitritkonzentration zur Summe der Nitrit- und Nitratkonzentrationen am Ende des Belüftungsschritts **a** größer als 0,8 ist.

2. Verfahren nach Anspruch 1, **dadurch gekennzeichnet, dass** die Entnahme **b1** des in Schritt **a** behandelten Wassers aus dem Reaktor durch die Entleerung **b3** mindestens eines Teils des aus Schritt **a** resultierenden Reaktorinhalts und/oder die Rezirkulation **b4** mindestens eines Teils des aus Schritt **a** resultierenden Reaktorinhalts zu einem zweiten biologischen Reaktor, der den ersten beschickt, erfolgt.

3. Verfahren nach einem der Ansprüche 1 oder 2, **dadurch gekennzeichnet, dass** die Entfernung von mindestens einem Teil des in Schritt **a** erzeugten Nitrits durch eine biologische Umwandlung **b2** unter Anoxie erreicht wird und die Abfolge der Schritte **a** und **b2** in dem biologischen Reaktor zyklisch wiederholt wird.

4. Verfahren nach einem der Ansprüche 1 oder 2, **dadurch gekennzeichnet, dass** die Entfernung mindestens eines Teils der in Schritt **a** erzeugten Nitrite durch die Rezirkulation **b4** mindestens einer Fraktion des Inhalts des aus Schritt a resultierenden Reaktors zu einem zweiten biologischen Reaktor, der den ersten beschickt, und durch die biologische Umwandlung **b2** unter Anoxie der Fraktion in dem zweiten Reaktor erreicht wird.

5. Verfahren nach einem der Ansprüche 1 oder 2, **dadurch gekennzeichnet, dass** die Entfernung mindestens eines Teils der in Schritt **a** erzeugten Nitrite durch die Entleerung **b3** mindestens einer Fraktion des aus Schritt **a** resultierenden Inhalts des Reaktors und die biologische Umwandlung **b2** unter Anoxie der gegebenenfalls in dem biologischen Reaktor verbleibenden Fraktion erfolgt.

6. Verfahren nach einem der vorhergehenden Ansprüche, **dadurch gekennzeichnet, dass** das tatsächliche Alter des belüfteten Schlamms des mindestens einen Reaktors zwischen 50 % und 90 %, vorzugsweise zwischen 60 % und 80 %, des theoretischen minimalen Alters des belüfteten Schlamms liegt.

7. Verfahren nach einem der vorhergehenden Ansprüche, **dadurch gekennzeichnet, dass** die Schritte **a, b** und **c** so lange wiederholt werden, bis das Verhältnis der Nitritkonzentration zur Summe der Nitrit- und Nitratkonzentrationen am Ende des Belüftungsschritts **a** größer als 0,9 ist.

**Claims**

1. Method for the biological treatment of nitrogen in the form of ammonium in waste water by nitritation in a biological reactor comprising ammonium-oxidizing bacteria and nitrite-oxidizing bacteria, said reactor being a microbial cultured activated sludge reactor with dissociation of the hydraulic residence time and the residence time of the sludge, the waste water being urban or domestic effluents containing nitrogen at least partly in the form of ammonium, the process comprising:

   • at least one step a of controlled aeration of the biological reactor containing the waste water to be treated to maintain the dissolved oxygen concentration in the reactor at an average value equal to or greater than 2 mg/L, so as to oxidize at least part of the ammonium to nitrite by the ammonium-oxidizing bacteria present in the reactor,

   **characterized in that** the process further comprises:

   • at least one step b of removal of at least some of the nitrites produced in step a by:

      - a b1 sampling of treated water at stage a outside the reactor, and/or by
      - a biological transformation b2, into anoxia, implemented by heterotrophic denitritation in the presence of carbon and/or de-ammonification by Anammox,

   steps a and b being implemented successively and cyclically so that the nitrite concentration in the reactor at the beginning of stage a is less than 2 mg N-NO2/L or at least 2 times lower than the ammonium concentration in the reactor, and
   • a step c of extraction of a fraction of the reactor sludge resulting from steps a and b, per unit time, calculated so that an effective aerated sludge age of the reactor is less than or equal to a theoretical minimum aerated sludge age required for nitrification as defined by an exponential law decreasing as a function of the temperature defined by the equation: $A_{theoretical} = A = SF \times 3.4 \times 1.103^{(15-T°C)}$, with T°C temperature in degrees Celsius and SF a correction factor of 1.45 to 1.8 depending on the size of the biological nitrogen treatment plant in the effluent,

such that nitrate production is minimized relative to nitrite production in the reactor by suppressing the activity of nitrite-oxidizing bacteria by said stage a aeration, said stage b nitrite removal and said effective stage c aerated sludge age ; and

Steps a, b and c are repeated until the ratio of nitrite concentration to the sum of nitrite and nitrate concentrations at the end of aeration step a is greater than 0.8.

2. Method according to claim 1, **characterised in that** the sampling b1 of treated water in step a, out of the reactor, is carried out by emptying b3 of at least a fraction of the reactor contents resulting from stage a and/or recirculating b4 of at least a fraction of the reactor contents resulting from stage a to a second biological reactor which feeds the first.

3. Method according to any one of claims 1 or 2, **characterised in that** the removal of at least some of the nitrites produced in step a is carried out by a biological transformation b2 into anoxia and the sequence of steps a and b2 being repeated cyclically in said biological reactor.

4. Method according to any one of claims 1 or 2, **characterised in that** the removal of at least part of the nitrites produced in step a is achieved by recirculating b4 at least a fraction of the contents of the reactor resulting from step a to a second biological reactor which feeds the first reactor and by the biological transformation b2 into anoxia of said fraction in said second reactor.

5. Method according to any one of claims 1 or 2, **characterised in that** the removal of at least part of the nitrites produced in step a is achieved by emptying b3 of at least a fraction of the reactor contents resulting from step a and the biological transformation b2 into anoxia of the fraction possibly remaining in said biological reactor.

6. Method according to one of the preceding claims, **characterised in that** the effective aerated sludge age of said at least one reactor is between 50% and 90%, preferably between 60% and 80% of the theoretical minimum aerated sludge age.

7. Method according to one of the preceding claims, **characterised in that** steps a, b and c are repeated until the ratio of the nitrite concentration to the sum of the nitrite and nitrate concentrations at the end of aeration step a is greater than 0.9.

**Figure 1**

Figure 2

**Figure 3A**

**Figure 3B**

Figure 4

**Figure 5**

Figure 6

**EP 3 692 000 B1**

## RÉFÉRENCES CITÉES DANS LA DESCRIPTION

**Documents brevets cités dans la description**

- US 5863435 A
- US 6383390 B
- US 20140069863 A